# EUROPÄISCHE PATENTSCHRIFT

(11) **EP 3 175 520 B1**
(45) Veröffentlichungstag und Bekanntmachung des Hinweises auf die Patenterteilung: **15.04.2020**
(21) Anmeldenummer: 14781840.5
(22) Anmeldetag: 30.09.2014
(51) Int. Cl.: H01T 19/02, H01T 23/00, B01J 19/08, B03C 3/40, F16L 19/02

(54) **ELEKTRODENELEMENT**
ELECTRODE ELEMENT
ÉLÉMENT D'ÉLECTRODE

(43) Veröffentlichungstag der Anmeldung: 07.06.2017
(73) Patentinhaber: Siemens Aktiengesellschaft, 80333 München (DE)
(72) Erfinder: ZAHNER, Ulrich, 91052 Erlangen (DE)
(86) Internationale Anmeldenummer: PCT/EP2014/070928
(87) Internationale Veröffentlichungsnummer: WO 2016/050282

(56) Entgegenhaltungen:
- JP-A- 2006 125 608
- US-A- 4 039 145
- US-A- 6 145 391

## Beschreibung

Die Erfindung betrifft ein Elektrodenelement, eine Leitungsanordnung mit einem Elektrodenelement sowie ein Verfahren zum Beeinflussen des elektrischen Potentials eines in einer Leitungsanordnung strömenden Mediums.

Gelegentlich ist es wünschenswert, das elektrische Potential eines in einer Leitungsanordnung strömenden Mediums zu beeinflussen. Dies kann beispielsweise bei Hochspannungsanlagen der Fall sein, bei denen elektrische Bauelemente auf einem hohen elektrischen Potential liegen oder bei denen verschiedene Bauelemente auf verschieden großen elektrischen Potentialen liegen. In solchen Fällen möchte man oftmals dafür sorgen, dass durch die Hochspannungsanlagen strömende Medien an bestimmten Orten der Hochspannungsanlage ein definiertes elektrisches Potential aufweisen.

Eine derartige geordnete Potentialfestlegung (eine sogenannte Potentialanbindung) des Mediums könnte man beispielsweise mit einer stabförmigen Elektrode erreichen, die von außen eingeschraubt wird in eine Leitung einer Leitungsanordnung, in der das Medium fließt. Allerdings hat sich gezeigt, dass an einer solchen stabförmigen Elektrode (Stabelektrode) sich infolge der elektrischen Felder in der Hochspannungsanlage und infolge von (kleinen) in dem Medium fließenden elektrischen Strömen ein unerwünschter Belag (z.B. eine Verkrustung aus elektrisch polaren und/oder neutralen Teilchen) bilden kann. Dieser Belag beeinträchtigt die elektrische Funktion der Elektrode und kann beispielsweise beim Ausbau der Stabelektrode von der Stabelektrode oder deren Halterung abplatzen, so dass das Medium durch Teilchen dieses Belags verschmutzt wird. In Abhängigkeit von der Größe der abgeplatzten Teilchen dieses Belags kann es zu Verstopfungen der Leitungsanordnung kommen und damit der Betrieb der Hochspannungsanlage beeinträchtigt werden. Notwendige Reinigungsarbeiten der Leitungsanordnung können sehr aufwändig und kostspielig sein.

Aus dem Patent US 6,145,391 A ist eine Anordnung gemäss den Oberbegriff der Anspruchs 1 zur Neutralisierung von elektrisch geladenen Teilchen bekannt. Die Neutralisierung erfolgt mittels einer Strömung von elektrisch entgegengesetzt geladenen Ionen. Die Anordnung weist Koronaenladungsringe auf, die in einer Neutralisierungszone die Ionen bereitstellen.

Der Erfindung liegt die Aufgabe zugrunde, ein Elektrodenelement und ein Verfahren zum Beeinflussen des elektrischen Potentials eines in einer Leitungsanordnung strömenden Mediums anzugeben, mit denen sicher und zuverlässig das elektrische Potential des Mediums beeinflusst werden kann.

Diese Aufgabe wird erfindungsgemäß gelöst durch ein Elektrodenelement und ein Verfahren nach den unabhängigen Patentansprüchen. Vorteilhafte Ausgestaltungen des Elektrodenelements und des Verfahrens sind in den abhängigen Patentansprüchen angegeben.

Offenbart wird ein Elektrodenelement mit einer ringförmigen Elektrode, die einen inneren und einem äußeren Durchmesser aufweist, mit einem ersten Dichtungselement, das an einer ersten Außenfläche der ringförmigen Elektrode anliegt und mit einem zweiten Dichtungselement, das an einer zweiten Außenfläche der ringförmigen Elektrode anliegt. Das erste Dichtungselement bedeckt also die erste Außenfläche der ringförmigen Elektrode bzw. das erste Dichtungselement berührt die erste Außenfläche der ringförmigen Elektrode. Ebenso bedeckt das zweite Dichtungselement die zweite Außenfläche der ringförmigen Elektrode bzw. das zweite Dichtungselement berührt die zweite Außenfläche der ringförmigen Elektrode. Das Elektrodenelement kann auch als eine Elektroden-Dichtungselement-Kombination bezeichnet werden.

Vorteilhafterweise weist das Elektrodenelement eine ringförmige Elektrode sowie zwei Dichtungselemente auf. Mittels dieser zwei Dichtungselemente kann das Elektrodenelement mit zwei Leitungen einer Leitungsanordnung fluiddicht verbunden werden. Dies hat den Vorteil, dass das Elektrodenelement bei einem Ausbau aus der Leitungsanordnung als eine Einheit komplett aus der Leitungsanordnung entfernt werden kann, ohne dass das Elektrodenelement dabei mechanisch belastet wird (wie es beispielsweise beim Herausschrauben einer Stabelektrode aus einer eine Bohrung mit Innengewinde aufweisenden Leitung einer Leitungsanordnung der Fall wäre). Daher kann bei Bedarf das Elektrodenelement zusammen mit dem sich möglicherweise gebildeten Belag aus der Leitungsanordnung entfernt werden, ohne dass dieser Belag beim Ausbau von dem Elektrodenelement abplatzt und die Leitungsanordnung verunreinigt. Bei diesem Elektrodenelement kann der innere Durchmesser in etwa dem inneren Durchmesser der Leitung entsprechen. Dies hat den Vorteil, dass mittels des Elektrodenelements das elektrische Potential eines in der Leitung strömenden Mediums entlang des vollständigen inneren Durchmessers der Leitung homogen beeinflusst werden kann. Dies ist ein deutlicher Vorteil gegenüber einer z. B. als Stabelektrode ausgebildeten Elektrode, welche im Wesentlichen radial in eine Leitung eingeschraubt wird und mit ihrem Ende das elektrische Feld eines relativ großen Bereichs des Rohrdurchmessers inhomogen aufnimmt.

Vorteilhafterweise kann das erste Dichtungselement ein erster Dichtungsring sein und das zweite Dichtungselement ein zweiter Dichtungsring sein. Das erste Dichtungselement und/oder das zweite Dichtungselement kann jeweils eine Gummidichtung sein, beispielsweise ein O-Ring. Das erste Dichtungselement und/oder das zweite Dichtungselement kann aber auch aus anderen Stoffen als aus Gummi bestehen.

Die ringförmige Elektrode kann im Wesentlichen rotationssymmetrisch ausgebildet sein. Die Elektrode kann aus einem elektrisch leitenden Material bestehen und/oder das erste Dichtungselement und das zweite Dichtungselement können aus einem elektrisch nichtleitenden (elektrisch isolierenden) Material bestehen.

Das Elektrodenelement kann so ausgestaltet sein, dass die erste Außenfläche und die zweite Außenfläche einander gegenüberliegen. Dies ermöglicht es vorteilhafterweise, das Elektrodenelement bei der Montage derart zu befestigen, dass die erste Außenfläche mit dem ersten Dichtungselement an einer ersten Leitung und die zweite Außenfläche mit dem zweiten Dichtungselement an einer zweiten Leitung anliegt.

Das Elektrodenelement kann auch so ausgestaltet sein, dass die erste Außenfläche und/oder die zweite Außenfläche jeweils eine kreisringförmige Außenfläche der Elektrode ist. Dies erleichtert das fluiddichte Verbinden des Elektrodenelements mit der ersten Leitung und der zweiten Leitung.

Das Elektrodenelement kann auch so ausgestaltet sein, dass die Oberfläche der Elektrode im Bereich des inneren Durchmessers von einem elektrochemisch edlen Material gebildet ist. Elektrochemisch edle Materialien sind beispielsweise Edelmetalle (wie Gold oder Platin) oder Edelstahl. Solche elektrochemisch edle Materialien zeichnen sich dadurch aus, dass diese beim Fließen eines elektrischen Stroms nicht oder nur minimal beeinträchtigt (z.B. zerstört oder beschädigt) werden.

Das Elektrodenelement kann aber auch so ausgestaltet sein, dass die Oberfläche der Elektrode im Bereich des äußeren Durchmessers von einem elektrochemisch unedlen Material gebildet ist. Derartige elektrochemisch unedle Materialien sind beispielsweise Eisen oder unlegierter Stahl. Diese Materialien sind in der Regel billiger als elektrochemisch edle Materialien. Daher ist eine Elektrode, deren Oberfläche nur im Bereich des inneren Durchmessers von einem elektrochemisch edlen Material gebildet ist und deren Oberfläche im Bereich des äußeren Durchmessers von einem elektrochemisch unedlen Material gebildet ist, kostengünstiger als eine Elektrode, deren Oberfläche vollständig von einem elektrochemisch edlen Material gebildet ist. Die Dichtungselemente schirmen dann die unedlen Teile der Elektrode vom Fluid ab.

Die Elektrode kann so ausgestaltet sein, dass die Oberfläche der Elektrode im Bereich des inneren Durchmessers (zur Vermeidung von Maxima von Feldstärke und Stromdichte) eckenfrei und kantenfrei ist. Mit anderen Worten kann die Elektrode im Bereich ihres inneren Durchmessers eine Verrundung aufweisen / verrundet sein. Mit wieder anderen Worten gesagt, kann die Querschnittsfläche der Elektrode im Bereich des inneren Durchmessers eine abgerundete Kontur aufweisen. Dabei ist vorteilhaft, dass die (mit dem fließenden Medium in Kontakt tretende) Oberfläche der Elektrode im Bereich des inneren Durchmessers eckenfrei und kantenfrei ist, d. h. dass sie im Bereich des inneren Durchmessers keine Ecken und keine Kanten aufweist, sondern abgerundet ist. An Ecken oder Kanten würden sich nämlich Maximalwerte der elektrischen Feldstärke und/oder Maximalwerte der elektrischen Stromdichte einstellen. An diesen Bereichen maximaler Feldstärke beziehungsweise maximaler Stromdichte würde es zu einem verstärkten Wachstum des Belags auf der Oberfläche der Elektrode kommen, was zu einem ungleichmäßigen Wachstum des Belags auf der Elektrode führen würde. Ein solcher ungleichmäßig gewachsener Belag könnte beim Ausbau der Elektrode leichter abplatzen als ein gleichmäßig und einheitlich gewachsener Belag. Anstelle von Bereichen mit Maxima wird eine gleichmäßige niedrige Feldstärke bzw. Stromdichte auf der Oberfläche der Elektrode erreicht; dadurch wird Belagwachstum, Materialabtrag sowie Materialanlagerung vermieden bzw. minimiert. Daher ist es vorteilhaft, Ecken und Kanten auf der Oberfläche der Elektrode im Bereich des inneren Durchmessers zu vermeiden.

Das Elektrodenelement kann einen elektrischen Anschlussleiter, der an einem äußeren Umfang der Elektrode elektrisch mit der Elektrode verbunden ist, aufweisen. Mittels dieses elektrischen Anschlussleiters kann die Elektrode mit einem elektrischen Potential beaufschlagt werden.

Das Elektrodenelement kann aber auch mehrere elektrische Anschlussleiter, die an verschiedenen Stellen der Elektrode (insbesondere an verschiedenen Stellen des Umfangs der Elektrode) elektrisch mit der Elektrode verbunden sind, aufweisen. Dabei kann die Elektrode an den verschiedenen Stellen mittels der elektrischen Anschlussleiter mit dem elektrischen Potential beaufschlagt werden. Dadurch wird eine Störung im Falle eines defekten Anschlussleiters vermieden (Redundanz).

Das Elektrodenelement kann auch so ausgestaltet sein, dass die Elektrode einen im Wesentlichen radial verlaufenden Durchbruch aufweist, durch den ein Medium in den Innenraum der ringförmigen Elektrode eingebracht werden kann oder durch den ein Medium aus dem Innenraum der ringförmigen Elektrode entnommen werden kann. Dadurch kann vorteilhafterweise mittels des Elektrodenelements das Medium einer Leitungsanordnung zugeführt werden oder aus dieser entnommen werden.

Das Elektrodenelement kann so ausgestaltet sein, dass die Elektrode eine Scheibe oder eine Hülse ist. Gemäß dem Patentanspruch 1 ist die Elektrode eine Hülse. Bei einer Scheibe ist der äußere Durchmesser um ein Vielfaches größer als die Dicke der Scheibe; bei einer Hülse kann der äußere Durchmesser durchaus in derselben Größenordnung liegen wie die Länge der Hülse.

Das Elektrodenelement kann so ausgestaltet sein, dass die Elektrode einen ersten Ring und einen zweiten Ring aus unterschiedlichen Materialien aufweist. Der erste Ring und der zweite Ring können koaxial angeordnet sein.

Dabei kann beispielsweise der erste Ring aus einem elektrisch leitenden Material und der zweite Ring aus einem elektrisch nichtleitenden Material bestehen. Dadurch ist es möglich, mittels des ersten Rings die elektrische Leitfähigkeit der Elektrode zu realisieren, während der zweite Ring die mechanische Stabilität der Elektrode vergrößert.

Das Elektrodenelement kann so ausgestaltet sein, dass der erste Ring im Bereich des äußeren Durchmessers der Elektrode angeordnet ist und der zweite Ring im Bereich des inneren Durchmessers der Elektrode angeordnet ist.

Das Elektrodenelement kann auch so ausgestaltet sein, dass der erste Ring auf den zweiten Ring aufgeschrumpft ist. Dabei können der erste Ring und der zweite Ring insbesondere jeweils als eine Metallhülse ausgestaltet sein. Vorzugsweise bestehen der erste äußere Ring aus einem elektrochemisch unedlen Material und der zweite innere Ring aus einem elektrochemisch edlen Material.

Alternativ kann das Elektrodenelement auch so ausgestaltet sein, dass der erste Ring und der zweite Ring entlang ihrer gemeinsamen Rotationsachse nebeneinander angeordnet sind.

Das Elektrodenelement ist so ausgestaltet, dass die Hülse (zur Befestigung) einen Flansch und ein Außengewinde aufweist. Damit lässt sich das Elektrodenelement mechanisch stabil mit Leitungen für das Medium verbinden.

Offenbart wird weiterhin eine Leitungsanordnung mit einer ersten Leitung und einer zweiten Leitung und mit (mindestens) einem Elektrodenelement nach einer der vorstehend beschriebenen Varianten, wobei das Elektrodenelement die erste Leitung mit der zweiten Leitung verbindet. Bei dieser Leitungsanordnung kann das Elektrodenelement die erste Leitung mit der zweiten Leitung derart verbinden, dass ein Medium von der ersten Leitung durch die ringförmige Elektrode des Elektrodenelements hindurch in die zweite Leitung strömen kann. Die erste Leitung und/oder die zweite Leitung kann dabei jeweils als ein Rohr ausgestaltet sein. Das Medium kann z.B. ein Kühlmittel sein. Die Leitungsanordnung kann auch als ein Leitungssystem bezeichnet werden. Die Leitungen der Leitungsanordnung können dabei aus einem elektrisch nichtleitenden Material bestehen. Diese Leitungsanordnung kann ein oder mehrere Elektrodenelemente aufweisen.

Die Leitungsanordnung kann so ausgestaltet sein, dass das Elektrodenelement zwischen der ersten Leitung und der zweiten Leitung (z.B. mittels einer oder mehrerer Überwurfmuttern) verspannt ist, wodurch das erste Dichtungselement den Übergang zwischen der ersten Leitung und der ersten Außenfläche des Elektrodenelements abdichtet und das zweite Dichtungselement den Übergang zwischen der zweiten Leitung und der zweiten Außenfläche des Elektrodenelements abdichtet. Damit wird auf einfache Weise eine fluiddichte Verbindung zwischen dem Elektrodenelement und der ersten Leitung sowie zwischen dem Elektrodenelement und der zweiten Leitung realisiert.

Die Leitungsanordnung kann so ausgestaltet sein, dass die Leitungsanordnung eine Kühlleitungsanordnung für leistungselektronische Bauelemente eines elektrischen Umrichters ist, die erste Leitung eine erste Kühlmittelleitung ist und die zweite Leitung eine zweite Kühlmittelleitung ist. Bei dieser Variante der Leitungsanordnung ist besonders vorteilhaft, dass mittels des Elektrodenelements ein Medium in Form eines Kühlmittel mit einem gewünschten elektrischen Potential versehen werden kann, so dass mit dem Kühlmittel problemlos elektrische Bauelemente gekühlt werden können, welche das jeweilige (oder ein ähnlich großes) elektrisches Potential aufweisen.

Offenbart wird weiterhin ein Verfahren zum Beeinflussen des elektrischen Potentials eines in einer Leitungsanordnung strömenden Mediums, bei dem eine ringförmige Elektrode von dem Medium durchströmt wird, die Elektrode mittels eines elektrischen Leiters (Anschlussleiters) mit einem elektrischen Potential beaufschlagt wird, und das elektrische Potential von der Elektrode auf das die Elektrode durchströmende Medium übertragen wird.

Dieses Verfahren kann so ausgestaltet sein, dass die Leitungsanordnung (mindestens) eine erste Leitung und eine zweite Leitung aufweist und das Medium von der ersten Leitung durch die ringförmige Elektrode hindurch in die zweite Leitung strömt.

Das Verfahren kann auch so ausgestaltet sein, dass die Leitungsanordnung eine Kühlleitungsanordnung ist, das Medium ein Kühlmittel ist, die erste Leitung eine erste Kühlmittelleitung ist und die zweite Leitung eine zweite Kühlmittelleitung ist.

Das Verfahren kann auch so ablaufen, dass mit dem Kühlmittel leistungselektronische Bauelemente eines elektrischen Umrichters gekühlt werden.

Im Weiteren wird die Erfindung anhand von Ausführungsbeispielen näher erläutert. Dazu ist in
- Figur 1: ein nicht beanspruchtes Vergleichsbeispiel eines Elektrodenelements in einer dreidimensionalen Darstellung, in
- Figur 2: das Elektrodenelement in einer Schnittdarstellung, in
- Figur 3: eine Leitungsanordnung mit dem Elektrodenelement in Schnittdarstellung, in
- Figur 4: eine Leitungsanordnung mit einem weiteren Vergleichsbeispiel eines Elektrodenelements, in
- Figur 5: eine Leitungsanordnung mit einem weiteren Vergleichsbeispiel eines Elektrodenelements, in
- Figur 6: eine Leitungsanordnung mit einem Ausführungsbeispiel eines als Hülse ausgestalteten Elektrodenelements mit einem Gewinde und einem Flansch für die Befestigung mittels zweier Überwurfmuttern, in
- Figur 7: eine Leitungsanordnung mit einem weiteren Ausführungsbeispiel eines als Hülse ausgestalteten Elektrodenelements mit zwei Flanschenfür die Befestigung mit zwei Überwurfmuttern, in
- Figur 8: eine Leitungsanordnung mit einem Vergleichsbeispiel eines Elektrodenelements, bei dem die Elektrode zwei Ringe aufweist, in
- Figur 9: eine Leitungsanordnung mit einem Ausführungsbeispiel eines Elektrodenelements, bei dem die Elektrode zwei Hülsen aufweist (mit zwei Gewinden für die Befestigung mit zwei Überwurfmuttern), in
- Figur 10: ein Ausführungsbeispiel einer Kühlleitungsanordnung zur Kühlung von leistungselektronischen Bauelementen eines Umrichters und in
- Figur 11: ein Ausführungsbeispiel einer Elektrode mit einem Durchbruch zum Einbringen eines Mediums in den Innenraum der Elektrode dargestellt.

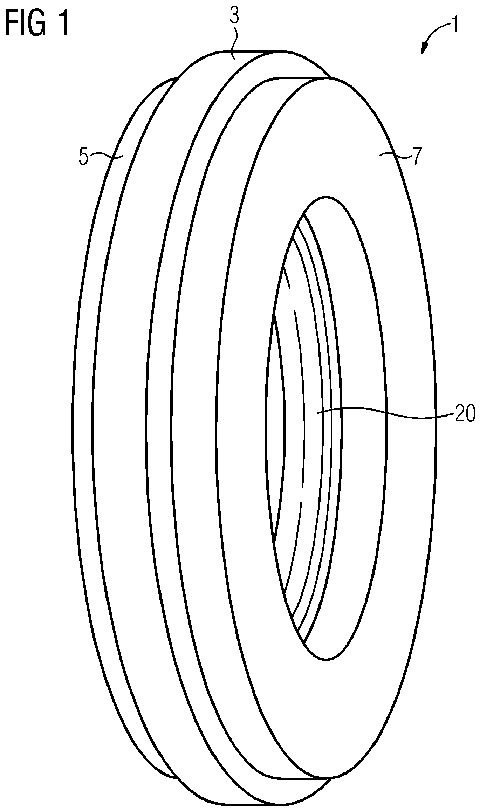

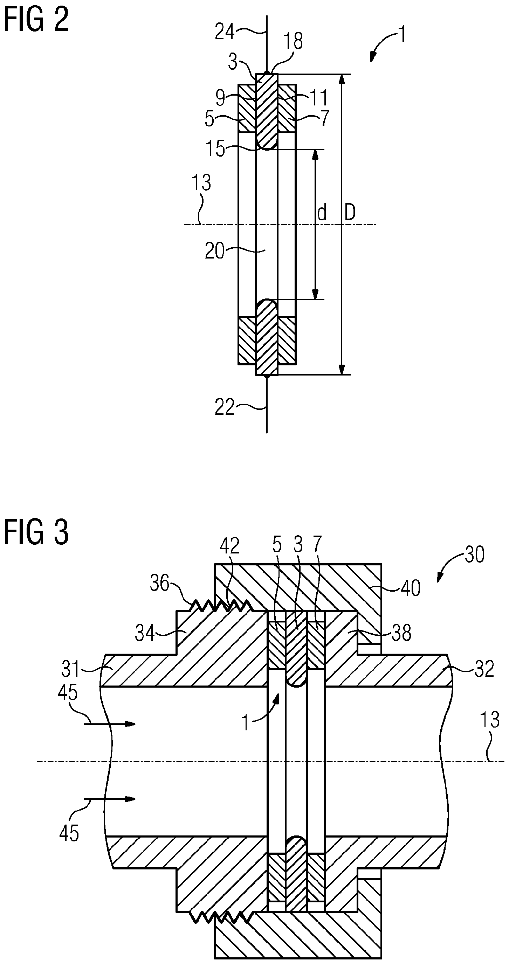

In Figur 1 ist in einer dreidimensionalen Darstellung ein nicht beanspruchtes Vergleichsbeispiel eines Elektrodenelements 1 dargestellt; Figur 2 zeigt das Elektrodenelement 1 in einer Schnittdarstellung. Das Elektrodenelement 1 weist eine scheibenförmige Elektrode 3, ein erstes Dichtungselement 5 und ein zweites Dichtungselement 7 auf. Bei der Elektrode 3 handelt es sich um eine ringförmige Elektrode, die einen inneren Durchmesser d und einen äußeren Durchmesser D aufweist. Die Elektrode 3 weist eine axiale und zentrische Öffnung 20 auf. Diese Öffnung 20 ist kreisrund und weist den inneren Durchmesser d auf.

Das erste Dichtungselement 5 liegt an einer ersten Außenfläche 9 der Elektrode 3 an, wobei sich die erste Außenfläche 9 auf einem Teilbereich der Elektrode zwischen dem inneren Durchmesser d und dem äußeren Durchmesser D erstreckt.

Die Elektrode 3 ist im Wesentlichen rotationssymmetrisch bezüglich der Rotationsachse 13 ausgebildet. Im Ausführungsbeispiel ist die Elektrode 3 eine Scheibe. Das erste Dichtungselement 5 und das zweite Dichtungselement 7 sind ebenfalls im Wesentlichen rotationssymmetrisch bezüglich der Rotationsachse 13 ausgebildet.

Das zweite Dichtungselement 7 liegt an einer zweiten Außenfläche 11 der ringförmigen Elektrode 3 zwischen dem inneren Durchmesser d und dem äußeren Durchmesser D an. Dabei sind der äußere Durchmesser des ersten Dichtungselements und der äußere Durchmesser des zweiten Dichtungselements kleiner als der äußere Durchmesser D der Elektrode 3; der innere Durchmesser des ersten Dichtungselements 5 und der innere Durchmesser des zweiten Dichtungselements 7 ist größer als der innere Durchmesser d der Elektrode 3.

Die erste Außenfläche 9 und die zweite Außenfläche 11 liegen einander gegenüber. Mit anderen Worten befindet sich die erste Außenfläche 9 auf der einen Seite der Elektrode 3, die zweite Außenfläche 11 befindet sich auf der gegenüberliegenden Seite der Elektrode 3. Die erste Außenfläche 9 ist parallel zur zweiten Außenfläche 11 angeordnet. Die erste Außenfläche 9 und die zweite Außenfläche 11 sind jeweils als kreisringförmige Außenflächen der Elektrode 3 ausgebildet. Dabei erstreckt sich die erste kreisringförmige Außenfläche 9 auf einem Teilbereich zwischen dem inneren Durchmesser d und dem äußeren Durchmesser D der Elektrode 3; die zweite kreisringförmige Außenfläche 11 erstreckt sich auf einem Teilbereich zwischen dem inneren Durchmesser d und dem äußeren Durchmesser D der Elektrode 3.

Die Oberfläche der Elektrode 3 ist im Bereich des inneren Durchmessers d von einem elektrochemisch edlen Material 15 gebildet. Im Ausführungsbeispiel besteht die Oberfläche der Elektrode 3 im Bereich des inneren Durchmessers d aus Platin 15, das in Form einer Beschichtung aufgebracht ist. Die Oberfläche der Elektrode 3 ist im Bereich des äußeren Durchmessers D von einem elektrochemisch unedlen Material 18 gebildet. Im Ausführungsbeispiel handelt es sich bei diesem elektrochemisch unedlen Material 18 um unlegierten Stahl.

Die Oberfläche der Elektrode 3 ist im Bereich 15 des inneren Durchmessers d eckenfrei und kantenfrei. In Figur 2 ist gut zu erkennen, dass die Elektrode in dem Bereich 15 eine Rundung aufweist. Dadurch wird die Ausbildung von Feldstärkemaxima und Stromdichtemaxima vermieden, welche sich an Ecken beziehungsweise an Kanten einer Elektrode ausbilden würden. Mit anderen Worten ist die Elektrode 3 im Bereich des inneren Durchmessers d verrundet, beziehungsweise die Elektrode 3 weist dort eine abgerundete Kontur auf.

Im Vergleichsbeispiel bestehen das erste Dichtungselement 5 und das zweite Dichtungselement 7 aus einem elektrisch nichtleitenden (elektrisch isolierenden) Material, insbesondere aus Gummi. Die Elektrode besteht hingegen aus einem elektrisch leitenden Material. Wie schon oben beschrieben, handelt es sich bei der Elektrode 3 um einen Stahlring, der lediglich im Bereich des inneren Durchmessers d mit Platin beschichtet ist. Dieser Bereich des inneren Durchmessers erstreckt sich im Ausführungsbeispiel vom inneren Durchmesser des ersten Dichtungselements 5 entlang der Rundung der Elektrode 3 bis zum inneren Durchmesser des zweiten Dichtungselements 7. Somit sind diejenigen Stellen der Elektrode 3 mit dem elektrochemisch edlen Material versehen, welche mit dem strömenden Medium in Berührung kommen. Alle anderen Stellen der Elektrode 3 kommen nicht mit dem strömenden Medium in Kontakt. Dies gilt insbesondere für die erste Außenfläche 9, die von dem ersten Dichtungselement 5 abgedeckt (und damit abgedichtet) ist, und für die zweite Außenfläche 11, die von dem zweiten Dichtungselement 7 abgedeckt (und damit abgedichtet) ist. Im Ausführungsbeispiel der Figur 2 ist das erste Dichtungselement 5 ein erster Dichtungsring; das zweite Dichtungselement 7 ist ein zweiter Dichtungsring.

Das erste Dichtungselement 5 dient zur fluiddichten Abdichtung zwischen der Elektrode 3 und einer Endfläche der ersten Leitung 31, an der das Elektrodenelement 1 befestigbar ist. Ebenso dient das zweite Dichtungselement 7 zur fluiddichten Abdichtung zwischen der Elektrode 3 und einer Endfläche der zweiten Leitung 32, an der das Elektrodenelement 1 befestigbar ist. Das erste Dichtungselement 5 und das zweite Dichtungselement 7 sind an der Elektrode 3 befestigt, beispielsweise können das erste Dichtungselement 5 und das zweite Dichtungselement 7 mit der Elektrode 3 verklebt sein.

Das Elektrodenelement 1, welches die Elektrode 3, das erste Dichtungselement 5 und das zweite Dichtungselement 7 aufweist, bildet ein kompaktes Element, welches zwischen zwei Leitungen montiert werden kann. Bei Bedarf wird das Elektrodenelement 1 als Ganzes ausgetauscht. Dabei bleiben ggf. auftretende Beläge (welche im Bereich 15 des inneren Durchmessers d auftreten) und sich von dem inneren Durchmesser des ersten Dichtungselements 5 bis zum inneren Durchmesser des zweiten Dichtungselements 7 erstrecken) an dem Elektrodenelement haften und platzen nicht von diesem ab. Ein Abplatzen der Beläge wird insbesondere dadurch verhindert, dass das Elektrodenelement 1 komplett (d. h. mitsamt des ersten Dichtungselements 5 und des zweiten Dichtungselements 7) ausgetauscht wird. Dadurch werden evtl. vorhandene Verschmutzungen in Form von Belägen nicht in die Leitungsanordnung bzw. in das Medium eingebracht.

Weiterhin ist in Figur 2 ein erster Anschlussleiter 22 und ein zweiter Anschlussleiter 24 dargestellt, welche an verschiedenen Stellen des Umfangs der Elektrode 3 elektrisch leitend mit der Elektrode 3 verbunden sind. Dadurch lässt sich das Potential der Elektrode 3 an den verschiedenen Stellen des Umfangs genauer beeinflussen bzw. festlegen. Durch die mehreren Anschlussleiter ist auch eine Redundanz gegeben für den Fall, dass einer der Anschlussleiter von der Elektrode abgetrennt werden sollte.

In Figur 3 ist eine Leitungsanordnung 30 dargestellt, bei der das Elektrodenelement 1 zwischen einer ersten Leitung 31 und einer zweiten Leitung 32 angeordnet ist. Die erste Leitung 31 besteht aus einem elektrisch nichtleitenden Material. Es handelt sich im Ausführungsbeispiel um eine erste Kunststoffleitung 31. Die zweite Leitung 32 besteht ebenfalls aus einem elektrisch nichtleitenden Material. Es handelt sich im Ausführungsbeispiel um eine zweite Kunststoffleitung 32. Die erste Leitung 31 und die zweite Leitung 32 sind jeweils Leitungen für ein flüssiges oder gasförmiges Medium. Mit anderen Worten ist die erste Leitung eine erste Fluidleitung und die zweite Leitung ist eine zweite Fluidleitung. Die erste Leitung 31 und die zweite Leitung 32 können jeweils beispielsweise als ein Rohr ausgestaltet sein.

Die erste Leitung 31 weist einen Flansch 34 auf, welcher ein Außengewinde 36 trägt. Die zweite Leitung 32 weist einen Flansch 38 auf. Eine Überwurfmutter 40 weist ein Innengewinde 42 auf und wird mit diesem Innengewinde 42 auf das Außengewinde 36 des Flansches 34 aufgeschraubt. Der Flansch 38 stellt einen Stützring dar, an dem sich die Überwurfmutter 40 abstützt. Mit anderen Worten gesagt, stellt der Flansch 38 einen Anschlagring für die Überwurfmutter 40 dar. Die Überwurfmutter 40 drückt den Flansch 38 der zweiten Leitung 32 in Richtung des Flansches 34 der ersten Leitung 31. Dadurch wird das Elektrodenelement 1 zwischen der ersten Leitung 31 und der zweiten Leitung 32 eingespannt/verspannt. Die dabei zusammengepressten Dichtungselemente 5 und 7 stellen fluiddichte Verbindung zwischen der ersten Leitung 31 und der zweiten Leitung 32 sicher. Dabei dichtet das erste Dichtungselement 5 den Übergang zwischen der ersten Leitung 31 und der Elektrode 3 ab; das zweite Dichtungselement 7 dichtet den Übergang zwischen der Elektrode 3 und der zweiten Leitung 32 ab.

Das Elektrodenelement 1 verbindet die erste Leitung 31 mit der zweiten Leitung 32. Dabei verbindet das Elektrodenelement die erste Leitung 31 mit der zweiten Leitung 32 derart, dass ein Medium 45 von der ersten Leitung 31 durch die ringförmige Elektrode 3 des Elektrodenelements 1 hindurch in die zweite Leitung 32 strömen kann. Bei dem strömenden Medium kann es sich um eine Flüssigkeit handeln, beispielsweise um Wasser oder um ein Kühlmittel. Wenn es sich bei dem Medium 45 um ein Kühlmittel 45 handelt, dann stellt die erste Leitung eine erste Kühlmittelleitung 31 und die zweie Leitung eine zweite Kühlmittelleitung 32 dar. Die Leitungsanordnung ist in diesem Falle eine Kühlleitungsanordnung. In diesem Fall wird ein Medium verwendet, das nur eine geringe elektrische Leitfähigkeit aufweist, bspw. wird entionisiertes Wasser als Medium (insbesondere als Kühlflüssigkeit/Kühlmittel) verwendet. Mit einer solchen Kühlleitungsanordnung lässt sich ein Kühlsystem aufbauen, beispielsweise ein Kühlsystem für leistungselektronische Bauelemente eines elektrischen Umrichters, welcher auf Hochspannungspotential betrieben wird.

Am Beispiel der Leitungsanordnung der Figur 3 wird ein Verfahren zum Beeinflussen des elektrischen Potentials eines in der Leitungsanordnung strömenden Mediums 45 offenbart: Das Medium 5 strömt von der ersten Leitung 31 durch die ringförmige Elektrode 3 hindurch in die zweite Leitung 32. Die ringförmige Elektrode wird (mittels eines in Figur 3 nicht dargestellten elektrischen Leiters) mit einem elektrischen Potential beaufschlagt. Dieses elektrische Potential wird von der Elektrode 3 auf das die Elektrode durchströmende Medium 45 übertragen. Die Elektrode 3 beeinflusst also das elektrische Potential des Mediums; die Elektrode 3 stellt also eine Potentialsteuerelektrode 3 (kurz: Steuerelektrode 3) dar. Bei dem Ausführungsbeispiel der Figur 3 ist das strömende Medium ein Kühlmittel, mit dem leistungselektronische Bauteile eines elektrischen Umrichters (nicht dargestellt) gekühlt werden. Bei diesen leistungselektronischen Bauelementen des Umrichters kann es sich beispielsweise um Thyristoren oder Leistungstransistoren eines Hochspannungs-Umrichters handeln.

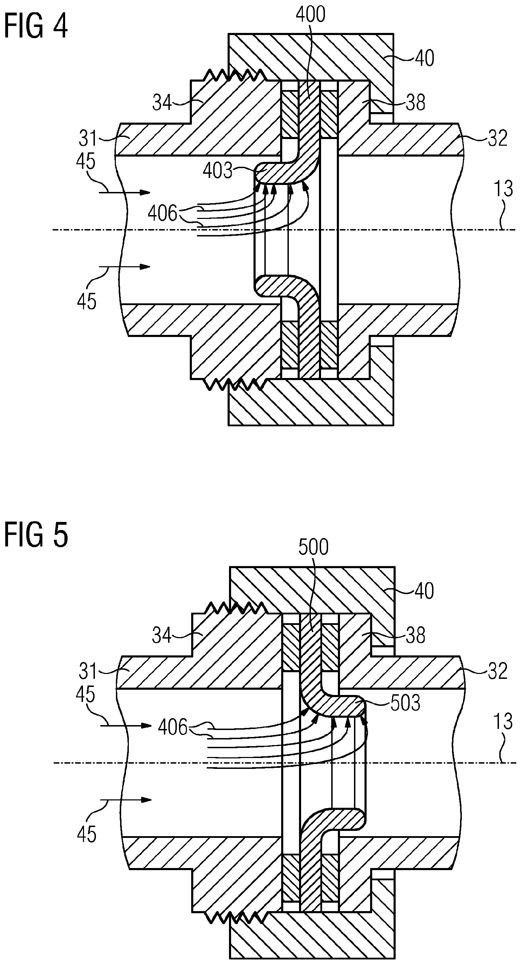

In Figur 4 ist ein weiteres Vergleichsbeispiel einer Leitungsanordnung mit einem Elektrodenelement dargestellt. Die Leitungsanordnung der Figur 4 unterscheidet sich von der Leitungsanordnung der Figur 3 im Wesentlichen dadurch, dass die in Figur 4 dargestellte Elektrode 400 eine andere Form aufweist als die Elektrode 3 der Figur 3. Die Elektrode 400 weist ebenfalls die Form einer Scheibe auf, der abgerundete Teil (Verrundung) im Bereich des inneren Durchmessers der Elektrode 400 ist jedoch anders ausgestaltet: Im Bereich des inneren Durchmessers d weist die Elektrode 400 einen umlaufenden Steg 403 beziehungsweise eine umlaufende Schulter 403 auf, welche eine runde Querschnittsfläche beziehungsweise eine verrundete Kontur aufweist. Die Elektrode 400 weist gegenüber der Elektrode 3 eine größere Berührungsfläche zu dem Medium 45 auf, wodurch die elektrische Feldstärke und die elektrische Stromdichte an dieser Berührungsfläche kleiner ausgeprägt sind. Beispielhaft sind in Figur 4 Feldlinien der elektrischen Feldstärke 406 eingezeichnet. Diese Feldlinien treten senkrecht in die Elektrode 400 ein.

In Figur 5 ist ein weiteres Vergleichsbeispiel einer Leitungsanordnung dargestellt. Eine Elektrode 500 ähnelt dabei der Elektrode 400 der Figur 4, jedoch ist bei dieser Elektrode 500 der umlaufende Steg 503 (Schulter 503) bezüglich der Richtung des strömenden Mediums 45 zur anderen Seite gerichtet. Auf diese Art und Weise lassen sich strömungstechnisch günstige Elektroden realisieren, welche für das strömende Medium 45 nur einen geringen strömungstechnischen Widerstand bilden. Eine Kombination aus Merkmalen der beiden Varianten gemäß Figur 4 und Figur 5 ist vorteilhaft und führt zu einer Minimierung der Feldstärke bei gleichzeitiger Minimierung des Strömungswiderstands.

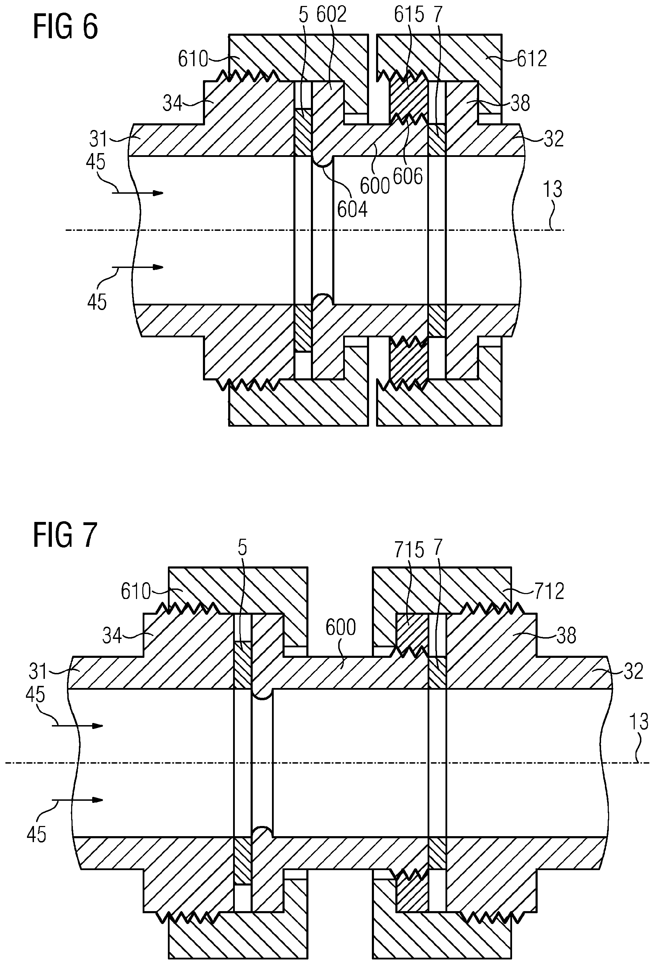

In Figur 6 ist eine weitere Leitungsanordnung dargestellt. Hierbei weist eine Elektrode 600 eine Hülsenform auf. Die Elektrode stellt also eine Hülse 600 dar. Die Elektrode 600 weist endseitig einen Flansch 602 und im Bereich des inneren Durchmessers eine Verrundung/Abrundung 604 auf. An dem dem Flansch 602 gegenüberliegenden Ende weist die Elektrode ein Außengewinde 606 auf. Benachbart zu dem Außengewinde 606 befindet sich die zweite Außenfläche der Elektrode 600, welche von dem zweiten Dichtungselement 7 bedeckt wird, wodurch eine fluiddichte Verbindung zwischen der Elektrode 600 und der zweiten Leitung 32 hergestellt wird. Zwischen dem Flansch 602 und der ersten Leitung 31 befindet sich das erste Dichtungselement 5, wodurch eine fluiddichte Verbindung zwischen der ersten Leitung 31 und der Elektrode 600 hergestellt wird. Mittels einer ersten Überwurfmutter 610 wird die Elektrode 600 mit der ersten Leitung 31 verspannt. Mittels einer zweiten Überwurfmutter 612 wird die zweite Leitung 32 mit der Elektrode 600 verspannt. Dabei wird die zweite Überwurfmutter 612 auf ein Außengewinde eines Gewinderings 615 aufgeschraubt. Dieser Gewindering 615 trägt außerdem ein Innengewinde welches auf das Außengewinde 606 der Elektrode 600 aufgeschraubt wird. (Der Gewindering 615 trägt also ein Außengewinde und ein Innengewinde). Der lösbare Gewindering 615 ermöglicht es, die erste Überwurfmutter 610 auf die Elektrode 600 aufzuschieben und die Elektrode 600 mit der ersten Leitung 31 zu verschrauben. Wenn die erste Überwurfmutter 610 an der in Figur 6 dargestellten Position ist, wird der Gewindering 615 auf die Elektrode 600 aufgeschraubt; anschließend wird die zweite Überwurfmutter 612 auf den Gewindering 615 aufgeschraubt. Dabei besteht vorteilhafter Weise die erste Überwurfmutter 610 aus demselben Material wie die erste Leitung 31 und die zweite Überwurfmutter 612 aus demselben Material wie der Gewindering 615. Die erste Leitung 31, die zweite Leitung 32, die erste Überwurfmutter 610, die zweite Überwurfmutter 612 und der Gewindering 615 können zum Beispiel aus Kunststoff bestehen. Es sind aber auch andere Materialkombinationen möglich.

In Figur 7 ist eine weitere Leitungsanordnung dargestellt. Bei dieser Leitungsanordnung sind die erste Leitung 31, die erste Überwurfmutter 610 und die Elektrode 600 identisch ausgebildet zu der Leitungsanordnung der Figur 6. Abweichend zur Figur 6 weist die Leitungsanordnung jedoch einen Gewindering 715 auf, welcher lediglich ein Innengewinde aufweist. Weiterhin weist die zweite Leitung 32 einen Flansch 38 auf, welcher ein Außengewinde trägt. Bei der in Figur 7 dargestellten Leitungsanordnung wird die zweite Überwurfmutter 712 auf das Außengewinde des Flansches 38 aufgeschraubt (und nicht auf das Außengewinde des Gewinderings 615, wie es bei Figur 6 der Fall ist). Im Ausführungsbeispiel der Figur 7 werden also die beiden Überwurfmuttern 610 und 712 in entgegengesetzter Richtung auf die jeweiligen Außengewinde aufgeschraubt, wohingegen beim Ausführungsbeispiel der Figur 6 die beiden Überwurfmuttern 610 und 612 in gleicher Richtung auf die Außengewinde aufgeschraubt wurden.

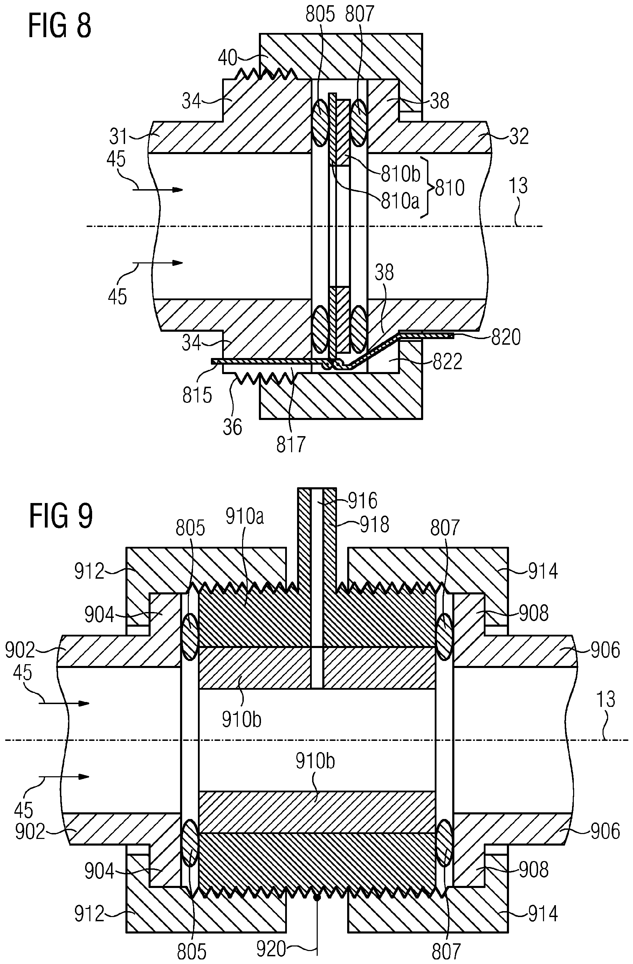

In Figur 8 ist ein weiteres Vergleichsbeispiel einer Leitungsanordnung dargestellt, welche in Übereinstimmung mit Figur 3 eine erste Leitung 31 mit einem ersten Flansch 34, eine Überwurfmutter 40 und eine zweite Leitung 32 mit einem Flansch 38 aufweist. Im Unterschied zu Figur 3 weist die Leitungsanordnung der Figur 8 ein erstes Dichtungselement 805 und ein zweites Dichtungselement 807 auf, welche jeweils eine runde bzw. ovale Querschnittsfläche aufweisen. Bei dem ersten Dichtungselement 805 und dem zweiten Dichtungselement 807 kann es sich beispielsweise um zwei O-Ringe handeln. Weiterhin weist die Leitungsanordnung der Figur 8 eine zweiteilige Elektrode 810 auf, wobei diese Elektrode 810 einen ersten Ring 810a und einen zweiten Ring 810b aufweist. Der erste Ring 810a und der zweite Ring 810b sind koaxial bezüglich der Rotationsachse 13 angeordnet. Weiterhin sind der erste Ring 810a und der zweite Ring 810b entlang ihrer gemeinsamen Rotationsachse 13 nebeneinander angeordnet. Der erste Ring 810a und der zweite Ring 810b bestehen aus unterschiedlichen Materialien. Im Ausführungsbeispiel besteht der erste Ring 810a aus einem elektrochemisch edlen Material (hier: aus Platin), während der zweite Ring 810b aus einem elektrisch nichtleitenden Kunststoff besteht. Mittels des ersten Rings 810a wird die elektrische Leitfähigkeit der Elektrode 810 realisiert, mittels des zweiten Rings 810b wird die mechanische Stabilität der Elektrode 810 verbessert.

Beispielsweise kann der aus einem Edelmetall wie Platin bestehende erste Ring 810a sehr dünn ausgestaltet sein, wohingegen der die mechanische Stabilität sicherstellende zweite Ring 810b vergleichsweise dicker ausgestaltet sein kann.

Im unteren Teil der Figur 8 sind zwei alternative Möglichkeiten dargestellt wie die Elektrode mittels eines Anschlussleiters mit einem elektrischen Potential versehen werden kann. Dabei ist ein Anschlussleiter ausreichend, es können jedoch auch mehrere Anschlussleiter (im Sinne einer Redundanz) verteilt über den Umfang vorhanden sein.

Ein erster Anschlussleiter 815 ist durch eine Nut 817 des Flansches 34 zu dem ersten Ring 810a geführt und elektrisch mit dem ersten Ring 810a verbunden. Die Nut 817 verläuft durch das Gewinde 36 des Flansches 34. Ein zweiter Anschlussleiter 820 ist durch eine Nut 822 des Flansches 38 zu dem ersten Ring 810a geführt und elektrisch mit dem ersten Ring 810a verbunden. Der zweite Anschlussleiter 820 quert den Flansch 38 und ist dann (zumindest ein Stück weit) entlang der zweiten Leitung 32 weitergeführt. Dabei ist die Nut 822 vorteilhaft so geführt, dass der zweite Anschlussleiter 820 innerhalb der Überwurfmutter 40 den Flansch 38 verlässt. Somit behindert der zweite Anschlussleiter 820 nicht das Aufschrauben der Überwurfmutter 40 auf die Flansche 34 und 38. Wenn an das freie Ende des ersten Anschlussleiters 815 und/oder des zweiten Anschlussleiters 820 ein vorgewähltes elektrisches Potential angelegt wird, dann wird dieses vorgewählte elektrische Potential zu der Elektrode 810 übertragen und von der Elektrode 810 auf das Medium 45 übertragen. Natürlich können auch die anderen beschriebenen Elektroden auf diese Art und Weise mit einem oder mehreren Anschlussleitern elektrisch verbunden werden (beispielsweise die Elektrode 3 der Figur 3 oder die Elektroden 400, 500 und 600) .

In Figur 9 ist ein Ausführungsbeispiel für eine Leitungsanordnung angegeben. Diese Leitungsanordnung weist eine erste Leitung 902 mit einem ersten Flansch 904 und eine zweite Leitung 906 mit einem zweiten Flansch 908 auf. Der erste Flansch 904 und der zweite Flansch 908 sind gewindefrei. Das Elektrodenelement weist neben dem ersten Dichtungselement 805 und dem zweiten Dichtungselement 807 eine Elektrode 910 auf. Die Elektrode 910 weist einen ersten Ring 910a und einen zweiten Ring 910b auf. Sowohl der erste Ring 910a als auch der zweite Ring 910b sind jeweils hülsenförmig ausgestaltet. Dabei ist der erste Ring 910a im Bereich des äußeren Durchmessers der Elektrode angeordnet und der zweite Ring 910b ist im Bereich des inneren Durchmessers der Elektrode 910 angeordnet. Im Ausführungsbeispiel stellt der erste Ring 910a eine Metallhülse dar und der zweite Ring 910b eine zweite Metallhülse dar. Der erste Ring 910a ist z.B. auf den zweiten Ring 910b aufgeschrumpft. Alternativ kann der erste Ring 910a auch aus einem elektrisch nicht leitenden Stützmaterial bestehen. Der zweite Ring (hier: die innere Hülse) 910b ist elektrochemisch edel ausgeführt. In einem anderen Ausführungsbeispiel kann der erste Ring (hier: die äußere Hülse) 910a zu Gunsten eines dickeren zweiten Ringes (hier: einer dickeren Hülse) 910b mit entsprechenden Gewinden ersatzlos entfallen, wenn Materialkosten keine Rolle spielen.

Der erste Ring 910a trägt ein Außengewinde, auf das eine erste Überwurfmutter 912 und eine zweite Überwurfmutter 914 aufgeschraubt ist. Mittels der ersten Überwurfmutter 912 und der zweiten Überwurfmutter 914 wird das Elektrodenelement zwischen der ersten Leitung 902 und der zweiten Leitung 906 verspannt/eingespannt.

Im oberen Teil der Figur 9 ist dargestellt, dass die Elektrode 910 (bestehend aus dem ersten Ring 910a und dem zweiten Ring 910b) einen radial verlaufenden Durchbruch 916 aufweist. Durch diesen Durchbruch 916 hindurch kann ein Medium von einem Außenraum in einen Innenraum der ringförmigen Elektrode 910 eingebracht werden. Das Medium kann auch durch den Durchbruch 916 aus dem Innenraum der ringförmigen Elektrode 910 entnommen und in den Außenraum gebracht werden. Dadurch kann vorteilhafterweise mittels der Elektrode bzw. mittels des Elektrodenelements das Medium der Leitungsanordnung zugeführt oder aus dieser entnommen werden. Der Durchbruch 916 ist teilweise von einem Stutzen 918 umgeben, an den ein Schlauch oder eine andere Leitung für das Medium angeschlossen werden kann. Die Elektrode stellt strömungstechnisch ein T-Stück dar.

Im unteren Teil der Figur 9 ist ein Anschlussleiter 920 dargestellt, der an dem äußeren Umfang des ersten Rings 910a elektrisch mit dem ersten Ring 910a verbunden ist. Mittels dieses Anschlussleiters 920 wird die (aus dem ersten Ring 910a und dem zweiten Ring 910b bestehende) Elektrode 910 mit einem elektrischen Potential beaufschlagt, d.h. mit einem elektrischen Potential versehen. Beispielsweise kann der Anschlussleiter 920 in den ersten Ring 910a eingeschraubt sein, z.B. mittels eines Schraubbolzens.

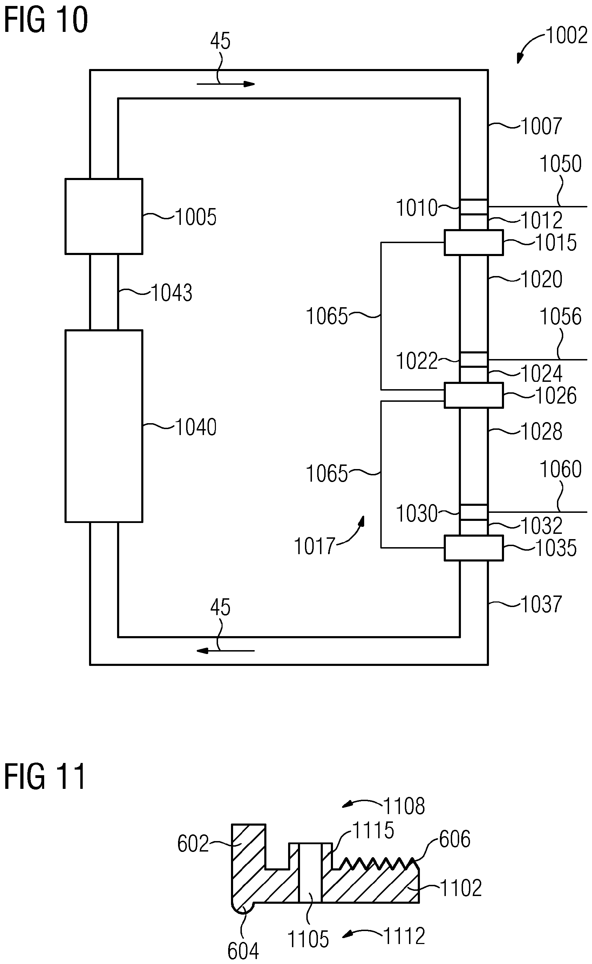

In Figur 10 ist in einer schematischen Darstellung ein mögliches Ausführungsbeispiel einer Kühlleitungsanordnung 1002 zur Kühlung von leistungselektronischen Bauelementen eines Umrichters dargestellt. Eine Pumpe 1005 pumpt das Medium 45 durch eine erste Leitung 1007, durch das erste Elektrodenelement 1010 und durch eine zweite Leitung 1012 zu einem ersten leistungselektronischen Bauelement 1015 eines Umrichters 1017. Das Kühlmittel 45 kühlt das erste leistungselektronische Bauelement 1015 und fließt dann weiter durch eine dritte Leitung 1020, ein zweites Elektrodenelement 1022, eine vierte Leitung 1024 zu einem zweiten leistungselektronischen Bauelement 1026 des Umrichters 1017.

Das Kühlmittel 45 kühlt das zweite leistungselektronische Bauelement 1026 und fließt dann weiter durch eine fünfte Leitung 1028, durch ein drittes Elektrodenelement 1030 und durch eine sechste Leitung 1032 zu einem dritten leistungselektronischen Bauelement 1035 des Umrichters 1017. Von dem dritten leistungselektronischen Bauelement 1035 fließt das Medium 45 durch eine siebente Leitung 1037 zu einem Wärmetauscher 1040, kühlt dort ab und fließt durch eine achte Leitung 1043 zu der Pumpe 1005 zurück. Die Leitungen sind hier jeweils Kühlmittelleitungen und das Medium ist ein Kühlmittel. (Parallelkühlkreise mit einer Druckerhöhungspumpe und Filtergeräten (für Ionen und Partikel) können ebenfalls eingesetzt werden, um Verschmutzungen aus dem Medium (Fluid) zu entfernen und auf diesem Wege die Konzentration von unerwünschten Teilchen (Ionen, gelöste Metalle, Kolloide usw.) zu vermindern und damit Ablagerungen zusätzlich entgegenzuwirken.)

Ein erster Anschlussleiter 1050 überträgt ein erstes elektrisches Potential zu dem ersten Elektrodenelement 1010. Das erste Elektrodenelement 1010 überträgt dieses erste Potential an das das erste Elektrodenelement 1010 durchströmende Medium 45. Wenn das Medium 45 das erste leistungselektronische Bauelement 1015 erreicht, weist das Medium immer noch im Wesentlichen das erste Potential auf. Damit herrschen bezüglich des elektrischen Potentials des Mediums beim ersten leistungselektronischen Bauelement 1015 klare Verhältnisse.

Danach strömt das Medium 45 zu dem zweiten Elektrodenelement 1022. Das zweite Elektrodenelement 1022 erhält über einen zweiten Anschlussleiter 1056 ein zweites elektrisches Potential und überträgt dieses zweite elektrische Potential an das das zweite Elektrodenelement 1022 durchströmende Medium 45. Wenn dieses Medium 45 das zweite leistungselektronische Bauelement 1026 erreicht, weist das Medium im Wesentlichen das zweite Potential auf. Damit herrschen bezüglich des elektrischen Potentials des Mediums auch beim zweiten leistungselektronischen Bauelement 1026 klar definierte Verhältnisse.

Danach strömt das Medium 45 zu dem dritten Elektrodenelement 1030. Das dritte Elektrodenelement 1030 erhält über einen dritten Anschlussleiter 1060 ein drittes elektrisches Potential und überträgt dieses dritte elektrische Potential an das das dritte Elektrodenelement 1030 durchströmende Medium 45. Wenn das Medium 45 das dritte leistungselektronische Bauelement 1035 erreicht, weist das Medium im Wesentlichen das dritte Potential auf. Damit herrschen bezüglich des elektrischen Potentials des Mediums auch beim dritten leistungselektronischen Bauelement 1035 klare Verhältnisse. Das erste leistungselektronische Bauelement 1015, das zweite leistungselektronische Bauelement 1026 und das dritte leistungselektronische Bauelement 1035 sind mittels elektrischer Leiter 1065 miteinander verbunden (in Figur 10 lediglich schematisch dargestellt) und bilden den Umrichter 1017. (Viele andere Varianten mit elektrischen Reihen- und Parallelschaltungen von Bauelementen sind denkbar, wobei immer durch die Elektrode dem Medium (Fluid) ein bestimmtes Potential eingeprägt wird, so dass negative Einwirkungen des potentialbehafteten Mediums auf die zu kühlenden Bauelemente vermieden werden.)

In Figur 11 ist beispielhaft ein Teil einer Elektrode 1102 dargestellt, die der Elektrode 600 ähnelt. Im Unterschied zur Elektrode 600 weist die Elektrode 1102 einen radial verlaufenden Durchbruch 1105 auf. Durch diesen Durchbruch 1105 kann ein Medium von einem Außenraum 1108 in einen Innenraum 1112 der ringförmigen Elektrode 1102 eingebracht werden. Das Medium kann aber auch durch den Durchbruch aus dem Innenraum 1112 der ringförmigen Elektrode entnommen und in den Außenraum 1108 gebracht werden. Dadurch kann vorteilhafterweise mittels der Elektrode bzw. des Elektrodenelements das Medium einer Leitungsanordnung zugeführt oder aus dieser entnommen werden. Der Durchbruch 1105 ist teilweise von einem Stutzen 1115 umgeben, an den ein Schlauch oder eine andere Leitung für das Medium angeschlossen werden kann. Die Elektrode stellt strömungstechnisch ein T-Stück dar.

Die beschriebenen Elektrodenelemente, Leitungsanordnungen und Verfahren können vorteilhafter Weise bspw. in Konvertertürmen von Hochspannungsanlagen zum Einsatz kommen. Derartige Hochspannungsanlagen können insbesondere HGÜ-Anlagen sein (HGÜ = Hochspannungs-Gleichstrom-Übertragung). In solchen Konvertertürmen sind Konverter/Umrichter angeordnet, welche eine Vielzahl von elektrischen Stromventilen (insbesondere HGÜ-Stromventile) aufweisen, die jeweils auf unterschiedlichem elektrischen Potential zum Einsatz kommen. Die leistungselektronischen Bauelemente dieser Stromventile sind oftmals zur Kühlung mit Leitungen (Rohren) miteinander verbunden. Durch diese Leitungen fließt ein Kühlmedium (Kühlmittel). Aufgrund des Potentialunterschieds zwischen den einzelnen Stromventilen fließen kleine elektrische Ausgleichsströme durch das Kühlmedium und es baut sich im Kühlmedium ein elektrisches Feld auf.

Zur geordneten Potentialanbindung des Kühlmediums können vorteilhafter Weise die beschriebenen Elektrodenelemente, Leitungsanordnungen und Verfahren eingesetzt werden. Dabei wird aufgrund einer günstigen Feldcharakteristik des elektrischen Feldes beziehungsweise einer günstigen Ausprägung der Stromdichte (jeweils ohne unerwünschte Maxima der elektrischen Feldstärke und der Stromdichte) eine Belagbildung auf der Elektrode reduziert, vergleichmäßigt und ggf. vermieden. Es werden auch nur geringe Mengen elektrochemisch edler Metalle (bspw. Edelmetalle wie Platin oder Gold) benötigt, da nur die Stellen der Elektrode das elektrochemisch edle Material aufweisen, die dem Kühlmedium (und insbesondere vergleichsweise hoher Feldstärke sowie in der Folge hoher Stromdichte) ausgesetzt sind und direkten Kontakt zum Kühlmedium haben. Aufgrund der Vermeidung von Maxima der Feldstärke und Stromdichte werden Teilentladungen weitestgehend vermieden, wodurch auch Korrosion in angrenzenden Flächen beziehungsweise Teilen verringert wird.

Die beschriebenen Elektrodenelemente lassen sich leicht und mit geringem Aufwand austauschen, ein unerwünschtes Ablösen etwaiger Beläge bei diesem Austauschen wird weitestgehend verhindert. Wie oben ausführlich beschrieben, kann die Elektrode des Elektrodenelements im einfachsten Fall die Form einer Scheibe (ähnlich einer Unterlegscheibe) aufweisen, die eine Innenbohrung aufweist, welche der Größe des Lumens der Leitung (innerer Querschnitt der Leitung) entspricht. Die Kanten der Innenbohrung sind dabei abgerundet, eine Beschichtung mit einem elektrochemisch edlen Material erfolgt nur um die Innenbohrung herum und nur wenig darüber hinaus nach außen (bspw. ca. der Dicke der Scheibe entsprechend nach außen). Die zwei Dichtungselemente können als zwei Gummidichtungen ausgestaltet sein, die einen annähernd gleichen Außendurchmesser wie die Elektrode aufweisen, jedoch eine etwas größere Innenbohrung als die scheibenförmige Elektrode aufweisen. Das erste Dichtungselement und das zweite Dichtungselement werden der Scheibe beidseitig konzentrisch so hinzugefügt, dass jene Stellen vollständig verdeckt sind, welche nicht von dem elektrochemisch edlen Material gebildet sind. Dieses Elektrodenelement (aufweisend das erste Dichtungselement, das zweite Dichtungselement und die Elektrode) kann auch als ein Sandwich bezeichnet werden und als ein Ersatzteil für die Leitungsanordnung geliefert werden.

Das Elektrodenelement wird zwischen zwei Leitungen eingebracht und bspw. mit einer Überwurfmutter zentriert sowie dicht fixiert. Das elektrische Potential kann auf verschiedene Arten auf die Elektrode aufgebracht werden, wobei ein oder mehrere Anschlussleiter verwendet werden. Besonders vorteilhaft ist es, wenn das elektrische Potential mehrfach (z. B. gleichmäßig um den Umfang verteilt) zu der Elektrode geführt wird. Dadurch wird die Stromdichte in der Elektrode reduziert und man erhält redundante Anschlusspunkte für den Fall eines Defektes.

Bei der ringförmigen Elektrode (z.B. in Form einer Scheibe) ist besonders vorteilhaft, dass diese Elektrode eine große Fläche zur Aufnahme des Stromes aufweist (weil die Elektrode ringförmig das fließende Medium umschließt). Die Feldstärke ist homogen über den Umfang der Elektrode verteilt und aufgrund der großen Fläche sind sowohl Feldstärke als auch Stromdichte deutlich kleiner als bei einer Stabelektrode. Das Elektrodenelement ist montage- und servicefreundlich und unempfindlich beim Transport, wodurch spezielle Transportvorkehrungen gegen Beschädigungen entfallen können. Außerdem kann - wie bereits ausführlich erläutert - ein Eindringen abgelagerter Verschmutzungen in den Fluidkreislauf (bspw. in den Kühlkreislauf) vermieden werden,

Es wurde ein Elektrodenelement, eine Leitungsanordnung sowie ein Verfahren beschrieben, mit denen sicher und zuverlässig ein fließendes Medium mit einem elektrischen Potential versehen werden kann.

## Patentansprüche

1. Elektrodenelement (1)
- mit einer rinförmigen Elektrode (3), die einen inneren Durchmesser (d) und einem äußeren Durchmesser (D) aufweist,
- mit einem ersten Element (5), das an einer ersten Außenfläche (9) der Elektrode (3) anliegt und
- mit einem zweiten ringförmigen Element (7), das an einer zweiten Außenfläche (11) der Elektrode (3) anliegt,
**dadurch gekennzeichnet, dass**
- das erste Element ein erstes Dichtungselement (5) ist,
- das zweite Element ein zweites Dichtungselement (7) ist, und
- die Elektrode eine Hülse (600) ist, die einen Flansch (602) und ein Außengewinde (606) aufweist.

2. Elektrodenelement nach Anspruch 1,
**dadurch gekennzeichnet, dass**
- die erste Außenfläche (9) und die zweite Außenfläche (11) einander gegenüberliegen.

3. Elektrodenelement nach Anspruch 1 oder 2,
**dadurch gekennzeichnet, dass**
- die erste Außenfläche (9) und/oder die zweite Außenfläche (11) jeweils eine kreisringförmige Außenfläche der Elektrode (3) ist.

4. Elektrodenelement nach einem der vorhergehenden Ansprüche,
**dadurch gekennzeichnet, dass**
- die Oberfläche der Elektrode (3) im Bereich des inneren Durchmessers (d) von einem elektrochemisch edlen Material (15) gebildet ist.

5. Elektrodenelement nach einem der vorhergehenden Ansprüche,
**dadurch gekennzeichnet, dass**
- die Oberfläche der Elektrode (3) im Bereich des äußeren Durchmessers (D) von einem elektrochemisch unedlen Material (18) gebildet ist.

6. Elektrodenelement nach einem der vorhergehenden Ansprüche,
**dadurch gekennzeichnet, dass**
- die Oberfläche der Elektrode (3) im Bereich des inneren Durchmessers (d) eckenfrei und kantenfrei ist.

7. Elektrodenelement nach einem der vorhergehenden Ansprüche,
**gekennzeichnet durch**
- einen elektrischen Anschlussleiter(22), der an einem äußeren Umfang der Elektrode (3) elektrisch mit der Elektrode (3) verbunden ist.

8. Elektrodenelement nach einem der vorhergehenden Ansprüche,
**gekennzeichnet durch**
- mehrere elektrische Anschlussleiter (22, 24), die an verschiedenen Stellen der Elektrode (3) elektrisch mit der Elektrode (3) verbunden sind.

9. Elektrodenelement nach einem der vorhergehenden Ansprüche,
**dadurch gekennzeichnet, dass**
- die Elektrode einen im Wesentlichen radial verlaufenden Durchbruch aufweist, durch den ein Medium in den Innenraum der Elektrode eingebracht werden kann oder durch den ein Medium aus dem Innenraum der Elektrode entnommen werden kann.

10. Leitungsanordnung (30) mit einer ersten Leitung (31), einer zweiten Leitung (32) und mit einem Elektrodenelement (1) nach einem der Ansprüche 1 bis 9, wobei
- das Elektrodenelement (1) die erste Leitung (31) mit der zweiten Leitung (32) verbindet.

11. Leitungsanordnung nach Anspruch 10,
**dadurch gekennzeichnet, dass**
- das Elektrodenelement (1) zwischen der ersten Leitung (31) und der zweiten Leitung (32) verspannt ist, wodurch das erste Dichtungselement (5) den Übergang zwischen der ersten Leitung (31) und der ersten Außenfläche (9) des Elektrodenelements (1) abdichtet und das zweite Dichtungselement (7) den Übergang zwischen der zweiten Leitung (32) und der zweiten Außenfläche (11) des Elektrodenelements (1) abdichtet.

12. Leitungsanordnung nach Anspruch 10 oder 11,
**dadurch gekennzeichnet, dass**
- die Leitungsanordnung eine Kühlleitungsanordnung (30) für leistungselektronische Bauelemente eines elektrischen Umrichters ist, die erste Leitung eine erste Kühlmittelleitung (31) ist und die zweite Leitung eine zweite Kühlmittelleitung (32) ist.

13. Verfahren zum Beeinflussen des elektrischen Potentials eines in einer Kühlleitungsanordnung (30) strömenden Kühlmittels (45) mittels eines Elektrodenelements (1) nach einem der Ansprüche 1 bis 9, bei dem
- die Elektrode (3) des Elektrodenelements (1) von dem Kühlmittel (45) durchströmt wird,
- die Elektrode (3) mittels eines elektrischen Anschlussleiters (22) mit einem elektrischen Potential beaufschlagt wird, und
- das elektrische Potential von der Elektrode (3) auf das die Elektrode durchströmende Kühlmittel (45) übertragen wird.

14. Verfahren nach Anspruch 13,
**dadurch gekennzeichnet, dass**
- die Kühlleitungsanordnung (30) eine erste Leitung (31) und eine zweite Leitung (32) aufweist und das Kühlmittel (45) von der ersten Leitung (31) durch die Elektrode (3) hindurch in die zweite Leitung (32) strömt.

15. Verfahren nach Anspruch 13 oder 14,
**dadurch gekennzeichnet, dass**
- die erste Leitung eine erste Kühlmittelleitung (31) ist und die zweite Leitung eine zweite Kühlmittelleitung (32) ist.

16. Verfahren nach Anspruch 15,
**dadurch gekennzeichnet, dass**
- mit dem Kühlmittel (45) leistungselektronische Bauelemente eines elektrischen Umrichters gekühlt werden.

## Claims

1. Electrode element (1)
- comprising a ring-shaped electrode (3) having an internal diameter (d) and an external diameter (D),
- comprising a first element (5) bearing against a first outer surface (9) of the electrode (3), and
- comprising a second ring-shaped element (7) bearing against a second outer surface (11) of the electrode (3),
**characterized in that**
- the first element is a first sealing element (5),
- the second element is a second sealing element (7), and
- the electrode is a sleeve (600) having a flange (602) and an outer thread (606).

2. Electrode element according to Claim 1,
**characterized in that**
- the first outer surface (9) and the second outer surface (11) are situated opposite one another.

3. Electrode element according to Claim 1 or 2,
**characterized in that**
- the first outer surface (9) and/or the second outer surface (11) are/is in each case an annular outer surface of the electrode (3).

4. Electrode element according to any of the preceding claims,
**characterized in that**
- the surface of the electrode (3) in the region of the internal diameter (d) is formed by an electrochemically noble material (15).

5. Electrode element according to any of the preceding claims,
**characterized in that**
- the surface of the electrode (3) in the region of the external diameter (D) is formed by an electrochemically base material (18).

6. Electrode element according to any of the preceding claims,
**characterized in that**
- the surface of the electrode (3) in the region of the internal diameter (d) is free of corners and free of edges.

7. Electrode element according to any of the preceding claims,
**characterized by**
- an electrical connection conductor (22) which is electrically connected to the electrode (3) at an outer circumference of the electrode (3).

8. Electrode element according to any of the preceding claims,
**characterized by**
- a plurality of electrical connection conductors (22, 24) which are electrically connected to the electrode (3) at different locations of the electrode (3).

9. Electrode element according to any of the preceding claims,
**characterized in that**
- the electrode has a substantially radially extending perforation, through which a medium can be introduced into the interior space of the electrode or through which a medium can be removed from the interior space of the electrode.

10. Line arrangement (30) comprising a first line (31), a second line (32) and comprising an electrode element (1) according to any of Claims 1 to 9, wherein
- the electrode element (1) connects the first line (31) to the second line (32).

11. Line arrangement according to Claim 10,
**characterized in that**
- the electrode element (1) is braced between the first line (31) and the second line (32), as a result of which the first sealing element (5) seals the transition between the first line (31) and the first outer surface (9) of the electrode element (1) and the second sealing element (7) seals the transition between the second line (32) and the second outer surface (11) of the electrode element (1).

12. Line arrangement according to Claim 10 or 11,
**characterized in that**
- the line arrangement is a cooling line arrangement (30) for power electronic components of an electrical converter, the first line is a first coolant line (31) and the second line is a second coolant line (32).

13. Method for influencing the electrical potential of a coolant (45) flowing in a cooling line arrangement (30) by means of an electrode element (1) according to any of Claims 1 to 9, wherein
- the coolant (45) flows through the electrode (3) of the electrode element (1),
- an electrical potential is applied to the electrode (3) by means of an electrical connection conductor (22), and
- the electrical potential is transferred by the electrode (3) to the coolant (45) flowing through the electrode.

14. Method according to Claim 13,
**characterized in that**
- the cooling line arrangement (30) comprises a first line (31) and a second line (32) and the coolant (45) flows from the first line (31) through the electrode (3) into the second line (32) .

15. Method according to Claim 13 or 14,
**characterized in that**
- the first line is a first coolant line (31) and the second line is a second coolant line (32).

16. Method according to Claim 15,
**characterized in that**
- power electronic components of an electrical converter are cooled by the coolant (45).

## Revendications

1. Elément (1) d'électrode
- comprenant une électrode (3) annulaire, qui a un diamètre (d) intérieur et un diamètre (D) extérieur,
- comprenant un premier élément (5), qui s'applique à une première face (9) extérieure de l'électrode (3) et
- comprenant un deuxième élément (7) annulaire, qui s'applique à une deuxième face (11) extérieure de l'électrode (3),
**caractérisé en ce que**
- le premier élément est un premier élément (5) d'étanchéité,
- le deuxième élément est un deuxième élément (7) d'étanchéité, et
- l'électrode est un manchon (600), qui a une bride (602) et un filetage (606) extérieur.

2. Elément d'électrode suivant la revendication 1,
**caractérisé en ce que**
- la première face (9) extérieure et la deuxième face (11) extérieure sont opposées l'une à l'autre.

3. Elément d'électrode suivant la revendication 1 ou 2,
**caractérisé en ce que**
- la première face (9) extérieure et/ou la deuxième face (11) extérieure sont chacune une face extérieure en forme d'anneau de cercle de l'électrode (3).

4. Elément d'électrode suivant l'une des revendications précédentes,
**caractérisé en ce que**
- la surface de l'électrode (3), dans la région du diamètre (d) intérieur est en un matériau (15) noble électrochimiquement.

5. Elément d'électrode suivant l'une des revendications précédentes,
**caractérisé en ce que**
- la surface de l'électrode (3) est formée dans la région du diamètre (D) extérieur en un matériau (18) non noble électrochimiquement.

6. Elément d'électrode suivant l'une des revendications précédentes,
**caractérisé en ce que**
- la surface de l'électrode (3), dans la région du diamètre (d) intérieur, est sans coin et sans arête.

7. Elément d'électrode suivant l'une des revendications précédentes,
**caractérisé par**
- un conducteur (22) de connexion électrique, qui est relié électriquement à l'électrode (3) sur un pourtour extérieur de l'électrode (3).

8. Elément d'électrode suivant l'une des revendications précédentes,
**caractérisé par**
- plusieurs conducteurs (22, 24) de connexion électriques, qui sont reliés électriquement à l'électrode (3), en des points différents de l'électrode (3).

9. Elément d'électrode suivant l'une des revendications précédentes,
**caractérisé en ce que**
- l'électrode a une ouverture, qui s'étend sensiblement radialement et par laquelle un fluide peut être introduit dans l'espace intérieur de l'électrode ou par laquelle un fluide peut être retiré de l'espace intérieur de l'électrode.

10. Agencement (30) de conduit, comprenant un premier conduit (31, un deuxième conduit (32) et un élément (1) d'électrode suivant l'une des revendications 1 à 9, dans lequel
- l'élément (1) d'électrode relie le premier conduit (31) au deuxième conduit (32).

11. Agencement de conduit suivant la revendication 10,
**caractérisé en ce que**
- l'élément (1) d'électrode est bloqué entre le premier conduit (31) et le deuxième conduit (32), grâce à quoi le premier élément (5) d'étanchéité rend étanche le passage entre le premier conduit (31) et la première face (9) extérieure de l'élément (1) d'électrode et le deuxième élément (7) d'étanchéité rend étanche le passage entre le deuxième conduit (32) et la deuxième face (11) extérieure de l'élément (1) d'électrode.

12. Agencement de conduit suivant la revendication 10 ou 11,
**caractérisé en ce que**
- l'agencement de conduit est un agencement (30) de conduits de refroidissement pour des composants d'électronique de puissance d'un convertisseur électrique, le premier conduit étant un premier conduit (31) de fluide de refroidissement et le deuxième conduit étant un deuxième conduit (32) de fluide de refroidissement.

13. Procédé pour influencer le potentiel électrique d'un fluide (45) de refroidissement passant dans un agencement (30) de conduits de refroidissement au moyen d'un élément (1) d'électrode suivant l'une des revendications 1 à 9, dans lequel
- on fait passer le fluide (45) de refroidissement dans l'électrode (3) de l'élément (1) d'électrode,
- on applique un potentiel électrique à l'électrode (3) au moyen d'un conducteur (22) de connexion électrique, et
- on transmet le potentiel électrique de l'électrode (3) au fluide (45) de refroidissement passant dans l'électrode.

14. Procédé suivant la revendication 13,
**caractérisé en ce que**
- l'agencement (30) de conduits de refroidissement a un premier conduit (31) et un deuxième conduit (32) et le fluide (45) de refroidissement passe du premier conduit (31) au deuxième conduit (32), en passant à travers l'électrode (3).

15. Procédé suivant la revendication 13 ou 14,
**caractérisé en ce que**
- le premier conduit est un premier conduit (31) de fluide de refroidissement et le deuxième conduit est un deuxième conduit (32) de fluide de refroidissement.

16. Procédé suivant la revendication 15,
**caractérisé en ce que**
- on refroidit²&, par le fluide (45) de refroidissement, des composants d'électronique de puissance d'un convertisseur électrique.
